# EUROPÄISCHE PATENTSCHRIFT

(11) **EP 0 663 245 B1**
(45) Veröffentlichungstag und Bekanntmachung des Hinweises auf die Patenterteilung: **23.09.1998**
(21) Anmeldenummer: 95100014.0
(22) Anmeldetag: 02.01.1995
(51) Int. Cl.: B08B 9/02, E03F 9/00

(54) **Rohrreinigungsmaschine mit einer Rotationskupplung für den Antrieb von Reinigungsspiralen**
Pipe cleaning apparatus comprising a rotational clutch for driving flexible cleaning rods
Appareil de nettoyage de tuyeaux comportant un accouplement rotatif pour l'entraînement de spirales de nettoyage

(30) Priorität: 14.01.1994 DE 9400556 U
(43) Veröffentlichungstag der Anmeldung: 19.07.1995
(73) Patentinhaber: ROTHENBERGER Werkzeuge Aktiengesellschaft, 60327 Frankfurt (DE)
(72) Erfinder: Trüschler, Dipl. Ing. Jürgen, D-37247 Grossalmerode (DE)
(74) Vertreter: Zapfe, Hans, Dipl.-Ing.

(56) Entgegenhaltungen:
- EP-B- 0 061 003
- NL-A- 8 500 014
- US-A- 1 717 730
- US-A- 3 735 935

## Beschreibung

Die Erfindung betrifft eine Rohrreinigungsmaschine mit einer Rotationskupplung für den Antrieb von Reinigungsspiralen für die Reinigung von Rohrleitungen mit einem Satz radial zur Kupplungsachse A-A beweglicher Kupplungsbacken, von denen jede eine innere Reibfläche für die Mitnahme der Reinigungsspirale und mindestens eine äußere schräg zur Kupplungsachse A-A verlaufende erste Steuerfläche aufweist, gegen die eine antreibbare Steuerhülse mit mindestens einer zweiten inneren Steuerfläche verschiebbar ist, die eine vergleichbare Steigung wie die äußeren Steuerflächen der Kupplungsbacken besitzt.

Eine Rohrreinigungsmaschine, in der eine Rotationskupplung der eingangs beschriebenen Gattung verwendet wird, ist durch die EP 0 061 003 B1 bekannt. Bei der bekannten Rotationskupplung sind die Steuerflächen der Kupplungsbacken Sektoren von Kegelstumpfflächen, die mit Steuerhülsen zusammenwirken, deren Steuerflächen gleichfalls reine Kegelstumpfflächen sind. Infolgedessen werden die Kupplungsbacken von der einen - angetriebenen - Steuerhülse lediglich durch Reibungskräfte in Drehung versetzt, und die Kupplungsbacken übertragen ihrerseits ein Drehmoment durch Reibungskräfte auf die Reinigungsspirale. Es sind also gewissermaßen zwei Reibungspaarungen mechanisch in Reihe geschaltet, und die Drehmomentenübertragung erfolgt aus dem Grunde, weil die Reibungspaarung zwischen der angetriebenen Steuerhülse und den Kupplungsbacken einen größeren mittleren Durchmesser besitzt als die Reibungspaarung zwischen den Kupplungsbacken und der Reinigungsspirale. Das Zusammenpressen der Kupplungsbacken erfolgt unter der Wirkung der bereits beschriebenen Kegelflächen durch axiales Zusammenpressen der Steuerhülsen. Dieses Zusammenpressen muß von der Bedienungsperson auf manuellem Wege durchgeführt werden. Dieser Vorgang erfordert nicht nur einen beträchtlichen Kraftaufwand seitens der Bedienungsperson, sondern auch eine sorgfältige Überwachung der Maschinenfunktion, worauf nachstehend näher eingegangen wird.

Bei der Reinigungsspirale handelt es sich nicht um eine Spirale in mathematischem Sinne, sondern um eine Schraubenfeder beträchtlicher Länge, die auch durch entsprechende Steckkupplungen aus Teillängen von Reinigungsspiralen zusammengesetzt werden kann. Von der Rohrreinigungsmaschine wird die Reinigungsspirale in einem großen Bogen in die Eintrittsöffnung der zu reinigenden Rohrleitung geführt. Die Bedienungsperson läßt hierbei die Reinigungsspirale durch die Hand laufen und trachtet danach, die Bogenlänge durch Druck von Hand zu verkürzen, wodurch sich die Reinigungsspirale mit dem an ihrem Ende angebrachten Reinigungswerkzeug in die verstopfte Rohrleitung hineinarbeitet. Als Reinigungswerkzeuge kommen hierbei Bohrer, Ringsägen, Fräser, Schleuderketten, Drahtbürsten etc. in Frage, womit die Aufzählung aber keineswegs erschöpft ist. Durch die Führung des Bogens der Reinigungsspirale von Hand erhält die Bedienungsperson ein Gefühl dafür, ob und mit welchem Vorschub das Reinigungswerkzeug am Ende der Reinigungsspirale arbeitet. Im Falle einer Schwergängigkeit des Reinigungswerkzeugs müssen unter Umständen mehrfache Anläufe, verbunden mit einer vorübergehenden Drehrichtungsumkehr der Reinigungsspirale, vorgenommen werden. Hierbei muß das Drehmoment kontrolliert werden, um die Reinigungsspirale nicht unzulässig zu tordieren. Der in der Reibungspaarung zwischen der Steuerhülse und den Kupplungsbacken auftretende Schlupf ist nur ungenügend kontrollierbar und verursacht dadurch Probleme, die ein erhebliches Maß an Geschicklichkeit seitens der Bedienungsperson voraussetzt.

Durch die US-A-3 735 935 ist eine gattungsfremde, nicht proportional wirkende Kupplung für Naben von Spulen, beispielsweise für Magnetbänder, bekannt, bei der eine Antriebsplatte verdrehfest mit einer Druckplatte verbunden ist. Zwischen der Antriebsplatte und der Druckplatte ist, wiederum verdrehfest, ein aus elastomerem Werstoff bestehender, geschlitzter, aber einteiliger Expansionsring angeordnet. Die Verdrehfestigkeit erfolgt durch formschlüssigen Eingriff von Nocken des Expansionsrings in Nuten der Antriebsplatte einerseits und durch Vorsprünge des Expansionsrings in Ausnehmungen des Druckrings andererseits. Die Mitnahme der Spule erfolgt durch radiales Ausdehnen eines elastomeren Reibungsbandes, das beispielhaft aus Gummi besteht und sehr gute Reibungseigenschaften aufweist. Die Betätigung erfolgt durch einen mit der Antriebswelle umlaufenden Handhebel mit bistabiler Schaltfunktion, der jedoch nur eine Einschaltung und eine Ausschaltung bewirkt. Eine solche Kupplung ist nicht für den Antrieb von nahezu endlosen Reinigungsspiralen vorgesehen oder geeignet, schon weil die Kupplung keine Hohlwelle zum Hindurchführen der Reinigunsspiralen besitzt, und auch deswegen, weil keine definierte Schlupfregelung durch mehr oder weniger starkes axiales Zusammenschieben von zwei Hohlwellenteilen und dadurch axiales Anpressen von einzelnen starren Kupplungsbacken an die Reinigungsspiralen möglich ist, die sämtlich aus hochverschleißfesten Werkstoffen bestehen. Der zentral in einer Ausnehmung der Druckplatte angeordnete bistabile Handhebel verhindert geradezu das Hindurchführen einer Reinigungsspirale durch die Kupplung. Die Verwendung eines derartigen Kupplungssystems bei Reinigungsmaschinen würde zum Bruch der Reinigungsspirale führen, wenn diese beim Eindringen eines am ihrem Ende angebrachten Reinigungswerkzeugs in eine feste Verstopfung einer Rohrleitung plötzlich blockiert wird, was ständig vorkommt. Eine Beeinflussung der Reibungsverhältnisse durch eindringende schleimige Massen tritt nicht auf.

Durch die NL-A-8 500 014 ist eine gattungsgemäße Rohrreinigungsmaschine mit einer Schleifkupplung bekannt, bei der jedoch die Reibungsflächen zwischen der angetriebenen Hohlwelle und den Kupplungsbacken einerseits und zwischen den Kupplungsbacken und der Reinigungsspirale andereseits glatt sind. Die Reibungsflächenpaare sind funktionell in Reihe geschaltet, wodurch undefinierte Reibungsverhältnisse auftreten. Es bleibt dem Einfluß der Bedienungsperson entzogen, ob nun ein Schlupf zwischen der Hohlwelle und den Kupplungsbacken oder zwischen den Kupplungsbacken und der Reinigungsspirale oder zwischen beiden Reibflächenpaaren auftritt. Die Reibungsverhältnisse werden sehr stark durch eindringende schleimige Massen beeinflußt, die beim Betrieb von der Reinigungsspirale mitgeschleppt werden und die Kupplung verschmutzen, so daß die Kupplung zu Reinigungszwecken auch leicht zerlegbar sein muß. Die Überwindung der Schmierwirkung der schleimigen Massen ist nur durch wesentlich erhöhte Betätigungskräfte auszugleichen, die von der Bedienungsperson aufgebracht werden müssen. Dabei ist jedoch eine proportionale Beeinflussung des auf die Reinigungsspirale übertragenen Drehmoments praktisch ausgeschlossen. Außerdem führt ein solcher Kupplungsaufbau sehr rasch zu Ermüdungserscheinungen bei der Bedienungsperson.

Der Erfindung liegt daher die Aufgabe zugrunde, eine Rohrreinigungsmaschine mit einer Rotationskupplung der eingangs beschriebenen Gattung anzugeben, bei der eine zuverlässigere und leichtere Kontrolle des Antriebsdrehmoments auf die Reinigungsspirale möglich ist.

Die Lösung der gestellten Aufgabe erfolgt bei der Rohrreinigungsmaschine mit Rotationskupplung erfindungsgemäß dadurch, daß die Kupplungsbacken und die mindestens eine Steuerhülse mit formschlüssig ineinandergreifenden Mitnehmerelementen versehen sind.

Durch die erfindungsgemäße Maßnahme entfällt eine Reibungspaarung, und der Anpreßdruck zwischen der angetriebenen Steuerhülse und den Kupplungsbacken dient ausschließlich zur Übertragung einer Axialbewegung der Steuerhülse in eine Radialbewegung der Kupplungsbacken. Eine funktionelle Reibungspaarung liegt infolgedessen nur noch zwischen den Kupplungsbacken und der Reinigungsspirale vor, und die Reibungsverhältnisse sind wesentlich leichter zu kontrollieren und zu steuern. Außerdem wurde gemessen, daß dadurch die Betätigungskräfte für die Bedienungsperson bei ansonsten gleichen geometrischen Verhältnissen um ca. 30 bis 50 % verringert werden, so daß erheblich verringerte Ermüdungserscheinungen seitens der Bedienungsperson auftreten.

Außerdem ist die Kraftübertragung durch Reibung zwischen den Kupplungsbacken und der Reinigungsspirale zuverlässiger, weil nämlich zwischen den Kupplungsbacken und der Reinigungsspirale nur punktförmige bzw. linienförmige Berührungen auftreten, wobei Flächen mit äußerst unterschiedlicher Krümmung aufeinandergleiten, während die Steuerflächen zwischen der Steuerhülse und den Kupplungsbacken annähernd ähnliche Krümmungsradien aufweisen und in einer einzigen Zwischenstellung sogar flächig aufeinanderliegen. Dadurch kann es beim Eindringen von Feuchtigkeit oder schmierigen Medien zwischen die Steuerflächen nach dem Stande der Technik zu einem Durchrutschen an der Stelle dieser Reibungspaarung kommen. Ein solcher Vorgang ist an dieser Stelle aber höchst unerwünscht. Dieses Durchrutschen unter ungünstigen Betriebsbedingungen wird durch den Gegenstand der Erfindung gleichfalls zuverlässig vermieden.

Es ist dabei besonders vorteilhaft, wenn die Kupplungsbacken mit je einem aus ihrer Steuerfläche herausragenden Vorsprung als Mitnehmerelement und die Steuerhülse mit einer der Zahl der Kupplungsbacken entsprechenden Anzahl von Ausnehmungen als Mitnehmerelemente versehen sind.

Dabei ist es besonders vorteilhaft, wenn die Vorsprünge der Kupplungsbacken von zueinander parallelen Seitenflächen und die Ausnehmungen in der Steuerhülse durch radiale Spalte mit zueinander parallelen Seitenwänden gebildet sind, zwischen denen die Vorsprünge der Kupplungsbacken in axialer und radialer Richtung gleitverschieblich angeordnet sind.

Weitere vorteilhafte Ausgestaltungen des Gegenstandes der Erfindung ergeben sich aus den übrigen Unteransprüchen. Von Bedeutung ist insbesondere die spiegelsymmetrische Ausbildung der Rotationskupplung nach Anspruch 6.

Ein Ausführungsbeispiel des Gegenstandes der Erfindung wird nachstehend anhand der Figuren 1 bis 12 näher erläutert.

Es zeigen:
- Figur 1: einen teilweisen Axialschnitt durch eine Rotationskupplung im Zusammenwirken mit einer Reinigungsspirale mit einem Außendurchmesser von 22 mm,
- Figur 2: eine Seitenansicht der Kupplungsbacken nach Figur 1 in Alleinstellung,
- Figur 3: einen Radialschnitt durch den Gegenstand nach Figur 1 entlang der Linie III-III,
- Figur 4: einen teilweisen Axialschnitt der Rotationskupplung nach Figur 1, jedoch im Zusammenwirken mit einer Reinigungsspirale mit einem Außendurchmesser von 16 mm,
- Figur 5: eine Seitenansicht der Kupplungsbacken nach Figur 4 in Alleinstellung,
- Figur 6: einen Radialschnitt durch den Gegenstand von Figur 4 entlang der Linie VI-VI,
- Figur 7: eine Seitenansicht einer einzelnen Kupplungsbacke,
- Figur 8: einen axialen Blick auf die Kupplungsbacke nach Figur 7,
- Figur 9: eine Draufsicht auf die Kupplungsbacke nach Figur 7 in Richtung des Pfeils IX,
- Figur 10: einen Radialschnitt durch die Kupplungsbacke nach Figur 9 entlang der Linie X-X,
- Figur 11: einen axialen Blick auf die Steuerflächen der Steuerhülse, und
- Figur 12: einen Axialschnitt durch den Gegenstand von Figur 11 entlang der Linie XII-XII.

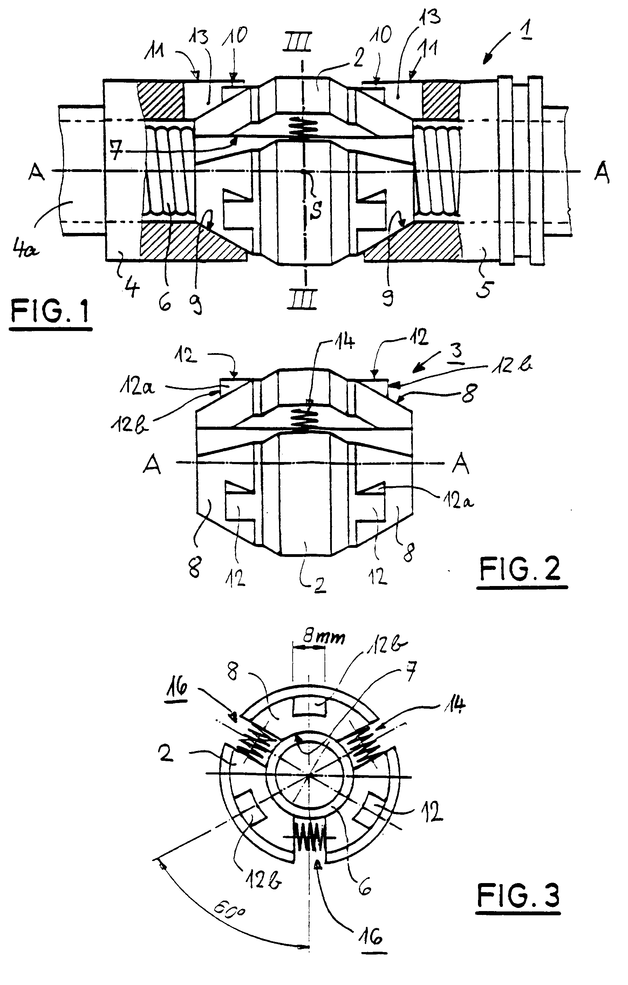

In den Figuren 1 bis 3 ist eine Rotationskupplung 1 dargestellt, deren aus drei identischen Kupplungsbacken 2 bestehender Backensatz 3 zwischen zwei Steuerhülsen 4 und 5 angeordnet ist, von denen eine in nicht gezeigter Weise über einen Zahnriemen mit einem Antriebsmotor in Verbindung steht. Die jeweils andere Steuerhülse läuft frei mit. Eine der beiden Steuerhülsen ist zudem unter dem Einfluß eines gleichfalls nicht gezeigten Handhebels axial verschiebbar, während sich die jeweils andere Steuerhülse gegen ein gehäusefestes Drucklager abstützt, das gleichfalls nicht gezeigt ist. Zum Zwecke eines Verständnisses dieser Zusammenhänge wird auf die EP 0 061 003 B1 verwiesen.

Durch den Backensatz 3 ist eine Reinigungsspirale 6 hindurchgeführt, die im vorliegenden Fall einen Außendurchmesser von 22 mm besitzt. Jede Kupplungsbacke besitzt für die Mitnahme der Reinigungsspirale 6 eine innere Reibfläche 7 (Figuren 3, 8 und 10) und zwei äußere, schräg zur Kupplungsachse A-A verlaufende erste Steuerflächen 8, die zumindest im wesentlichen als konvexe sektorförmige Kegelstumpfflächen ausgebildet sind. Gegen diese Steuerflächen 8 sind die beiden Steuerhülsen 4 und 5 relativ verschiebbar, die mindestens je eine zweite innere Steuerfläche 9 besitzen, die jeweils eine vergleichbare Steigung wie die äußeren Steuerflächen 8 der Kupplungsbacken 2 besitzen. Die Kupplungsbacken 2 und die Steuerhülsen 4 und 5 sind mit formschlüssig ineinandergreifenden Mitnehmerelementen 10 und 11 versehen.

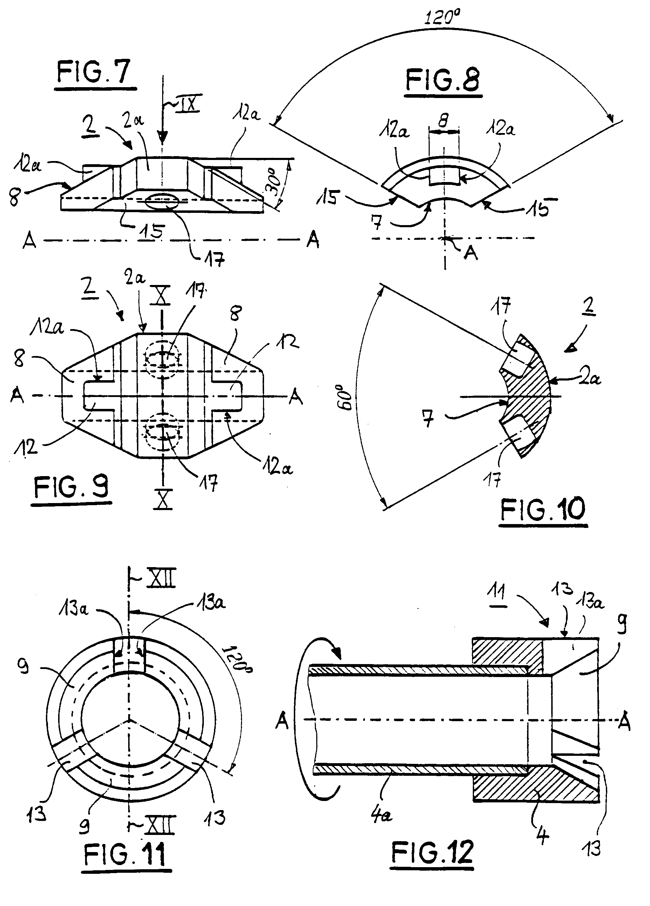

Wie aus Figur 1 hervorgeht, ist die Rotationskupplung 1 beiderseits der radialen Schnittebene III-III, in der auch der Kupplungsschwerpunkt liegt, spiegelsymmetrisch ausgebildet. Auf jeder Seite dieser Symmetrieebene sind die Kupplungsbacken 2 mit je einem aus ihrer Steuerfläche 8 herausragenden Vorsprung 12 als Mitnehmerelement versehen. Andererseits sind die Steuerhülsen 4 und 5 mit einer der Zahl der Kupplungsbacken 2 entsprechenden Anzahl von Ausnehmungen 13 als Mitnehmerelemente versehen. Die Vorsprünge 12 der Kupplungsbacken 2 sind von zueinander parallelen Seitenflächen 12a begrenzt, und die Ausnehmungen 13 in den Steuerhülsen 4 und 5 sind durch radiale Spalte mit zueinander parallelen Seitenwänden 13a gebildet (siehe Figuren 11 und 12), zwischen die die Vorsprünge 12 der Kupplungsbacken 2 in axialer und radialer gleitverschieblich angeordnet sind. Die resultierende Bewegung erfolgt gemäß der Steigung der Steuerflächen und setzt sich aus den besagten axialen und radialen Komponenten zusammen.

Die beim Stand der Technik hohlkegelstumpfförmig ausgebildete Steuerfläche besteht im vorliegenden Falle infolge der Ausnehmungen 13 bei einem dreiteiligen Backensatz 3 aus drei Steuerflächen 9, die jedoch in einer gemeinsamen Hohlkegelstumpffläche liegen. Die Steuerflächen 9 sind also Hohlkegel-Kegelstumpf-Sektorflächen.

Die Stirnflächen 12b der Vorsprünge 12 liegen auf jeder Seite der Symmetrieebene III-III in jeweils einer radialen Ebene, jedoch muß dies nicht zwingend so sein.

Die einzelnen Kupplungsbacken 2 werden durch Druckfedern 14 im Abstand voneinander gehalten, deren Achsen senkrecht zu den Seitenwänden 15 der Kupplungsbacken 2 verlaufen (siehe Figuren 7 und 8). Beim Zusammenschieben der Steuerhülsen 4 und 5 werden die Kupplungsbacken 2 unter Verringerung der Zwischenräume 16 zwischen den einzelnen Kupplungsbacken zusammengepreßt. Beim Auseinanderziehen der Steuerhülsen 4 und 5 vergrößern die Druckfedern 14 wiederum die besagten Zwischenräume 16, soweit dies der Abstand der Steuerhülsen 4 und 5 und die Steigung der Steuerflächen 8 und 9 zulassen. Natürlich wohnt den Druckfedern 14 auch ein gewisser Rückstelleffekt auf den Abstand der Steuerhülsen 4 und 5 inne.

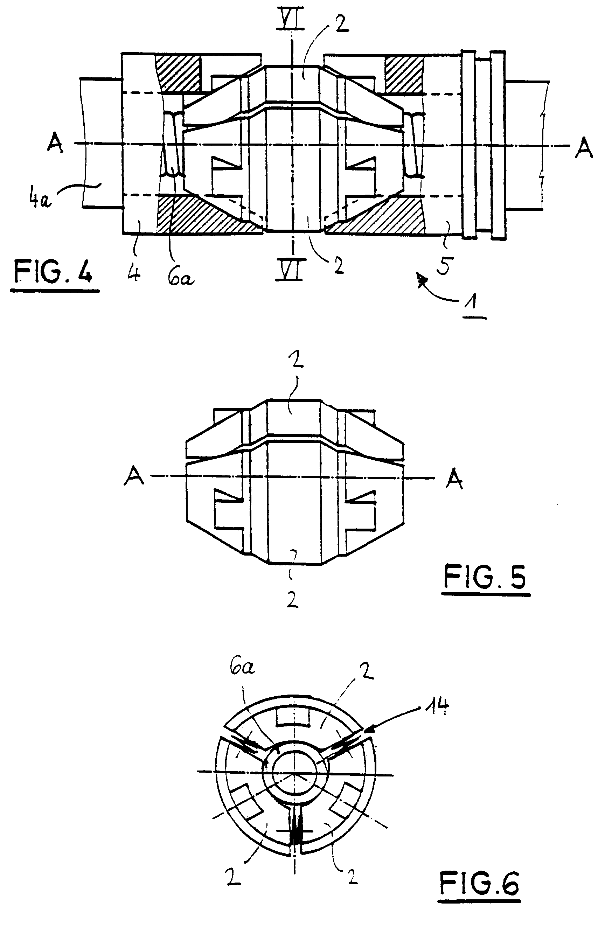

Die Figuren 4 bis 6 zeigen das Zusammenwirken der gleichen Rotationskupplung 1 mit einer Reinigungsspirale 6a von geringerem Durchmesser, nämlich von 16 mm. Diesen Figuren ist zu entnehmen, daß hierbei die Druckfedern 14 unter Verringerung der Zwischenräume 16 deutlich stärker zusammengepreßt werden. Der Krümmungsradius der inneren Reibfläche 7, der bei dem Ausführungsbeispiel nach den Figuren 1 bis 3 dem Radius der Reinigungsspirale entspricht, ist jetzt deutlich größer als der Radius der Reinigungsspirale 6a, so daß die Reibfläche 7 jetzt nur noch mit einzelnen Punkten an der Reinigungsspirale 6a anliegt. Dies reicht aber völlig aus, um ein ausreichendes Drehmoment auf die Reinigungsspirale 6a zu übertragen.

Ein Schlupf oder ein Durchdrehen zwischen den Steuerhülsen 4 oder 5 und den Kupplungsbacken 2 ist bei beiden Ausführungsbeispielen dank des Vorhandenseins der Mitnehmerelemente 10 und 11 ausgeschlossen.

Den Figuren 7 bis 10 sind weitere Einzelheiten der einzelnen Kupplungsbacken 2 zu entnehmen.

Die Figuren 7 und 10 zeigen Bohrungen 17, die in senkrechter Richtung von den Seitenwänden 15 ausgehen und zur Aufnahme der Enden der Druckfedern 14 dienen. In Figur 9 sind diese Bohrungen 17 gestrichelt dargestellt, weil sie hinter der Zylinderfläche 2a der Kupplungsbacken 2 liegen.

Aus Figur 12 ist noch zu entnehmen, daß die Steuerhülse 4 auf einer Hohlwelle 4a befestigt ist, die entweder angetrieben oder in einem Drucklager drehbar gelagert ist. Analoge Befestigungsverhältnisse gelten auch für die Steuerhülse 5. Der Innendurchmesser der Hohlwelle 4a muß natürlich dem maximalen Außendurchmesser der Reinigungsspirale 6 entsprechen, damit diese leichtgängig durch die Hohlwellen geführt werden kann.

## Patentansprüche

1. Rohrreinigungsmaschine mit einer Rotationskupplung (1) für den Antrieb von Reinigungsspiralen (6, 6a) für die Reinigung von Rohrleitungen mit einem Satz (3) radial zur Kupplungsachse (A-A) beweglicher Kupplungsbacken (2), von denen jede eine innere Reibfläche (7) für die Mitnahme der Reinigungsspirale (6, 6a) und mindestens eine äußere schräg zur Kupplungsachse (A-A) verlaufende erste Steuerfläche (8) aufweist, gegen die eine antreibbare Steuerhülse (4, 5) mit mindestens einer zweiten inneren Steuerfläche (9) relativ verschiebbar ist, die eine vergleichbare Steigung wie die äußeren Steuerflächen (8) der Kupplungsbacken (2) besitzt, **dadurch gekennzeichnet**, daß die Kupplungsbacken (2) und die mindestens eine Steuerhülse (4, 5) mit formschlüssig ineinandergreifenden Mitnehmerelementen (10, 11) versehen sind.

2. Reinigungsmaschine nach Anspruch 1, **dadurch gekennzeichnet**, daß die Kupplungsbacken (2) mit je einem aus mindestens einer Steuerfläche (8) herausragenden Vorsprung (12) als Mitnehmerelement (10) und die Steuerhülse (4, 5) mit einer der Zahl der Kupplungsbacken (2) entsprechenden Anzahl von Ausnehmungen (13) als Mitnehmerelemente (11) versehen sind.

3. Reinigungsmaschine nach Anspruch 2, **dadurch gekennzeichnet**, daß die Vorsprünge (12) der Kupplungsbacken (2) von zueinander parallelen Seitenflächen (12a) und die Ausnehmungen (13) in der Steuerhülse (4, 5) durch radiale Spalte mit zueinander parallelen Seitenwänden (13) gebildet sind, zwischen denen die Vorsprünge (12) der Kupplungsbacken (2) in axialer und radialer Richtung gleitverschieblich angeordnet sind.

4. Reinigungsmaschine nach Anspruch 3, **dadurch gekennzeichnet**, daß die Steuerflächen (8) der Kupplungsbacken (2) außerhalb der Vorsprünge (12) als Kegelstumpf-Sektorflächen ausgebildet sind.

5. Reinigungsmaschine nach Anspruch 1, **dadurch gekennzeichnet**, daß die Steuerfläche (9) der Steuerhülse (4, 5) als hohle Kegelstumpffläche ausgebildet ist, die durch die als radiale Spalte ausgebildeten Ausnehmungen (13) unterbrochen ist.

6. Reinigungsmaschine nach Anspruch 1, **dadurch gekennzeichnet**, daß beiderseits einer durch den Kupplungsschwerpunkt (S) gelegten radialen Ebene (III-III) die Steuerflächen (8, 9) der Kupplungsbacken (2), zweier Steuerhülsen (4, 5) und die Mitnehmerelemente (10, 11) von Kupplungsbacken (2) und Steuerhülsen (4, 5) spiegelsymmetrisch ausgebildet sind.

## Claims

1. Pipe-cleaning machine comprising a rotary clutch (1) for driving cleaning spirals (6, 6a) for cleaning pipelines comprising a set (3) of clutch jaws (2) which are movable radially to the clutch axis (A-A), each of which comprising an inner frictional surface (7) to pick up the cleaning spiral (6, 6a) and at least one outer first control surface (8) extending transversely to the clutch axis (A-A) against which is driven a drivable control sleeve (4, 5) which is relatively displaceable with at least one second inner control surface (9) which has an incline comparable to the outer control surfaces (8) of the clutch jaws (2), **characterised in that** the clutch jaws (2) and the at least one control sleeve (4, 5) are provided with positively interengaging pickup elements (10, 11).

2. Cleaning machine according to Claim 1, **characterised in that** the clutch jaws (2) are provided with each one protrusion (12), which protrudes from at least one control surface (8), as pickup element (10), and the control sleeve (4, 5) is provided with a number of cutouts (13) as pickup elements (11), which number corresponds with the number of clutch jaws (2).

3. Cleaning machine according to Claim 2, **characterised in that** the protrusions (12) of the clutch jaws (2) are formed by side surfaces (12a) which are parallel to each other, and the cutouts (13) in the control sleeve (4, 5) are formed by radial gaps with side walls (13) which are parallel to each other and between which the protrusions (12) of the clutch jaws (2) are arranged to be displaceable by sliding in the axial and radial direction.

4. Cleaning machine according to Claim 3, **characterised in that** the control surfaces (8) of the clutch jaws (2) outside the protrusions (12) are designed as truncated sector surfaces.

5. Cleaning machine according to Claim 1, **characterised in that** the control surface (9) of the control sleeve (4, 5) is designed as a hollow truncated surface which is interrupted by cutouts (13) designed as radial gaps.

6. Cleaning machine according to Claim 1, **characterised in that** on both sides of a radial plane (III - III) laid through the clutch centre of mass (S) are mirror-symmetrically arranged the control surfaces (8, 9) of the clutch jaws (2), two control sleeves (4, 5) and the pickup elements (10, 11) of clutch jaws (2) and control sleeves (4, 5)

## Revendications

1. Appareil de nettoyage de tuyaux comportant un accouplement rotatif (1) pour l'entraînement de spirales de nettoyage (6, 6a) pour le nettoyage de conduits tubulaires, comprenant un jeu (3) de mors d'accouplement (2) qui sont mobiles radialement par rapport à l'axe d'accouplement (A-A) et dont chacun présente une surface de frottement intérieure (7) pour l'entraînement de la spirale de nettoyage (6, 6a) et au moins une première surface de commande extérieure (8) qui est orientée obliquement par rapport à l'axe d'accouplement (A-A) et contre laquelle peut effectuer un coulissement relatif une douille de commande (4, 5) qui peut être entraînée par au moins une seconde surface intérieure de commande (9) qui possède une pente comparable à celle des surfaces de commande extérieures (8) des mors d'accouplement (2), caractérisé par le fait que les mors d'accouplement (2) et la douille de commande (4, 5), dont il y a au moins une, sont munis d'éléments entraîneurs (10, 11) qui viennent en prise l'un dans l'autre par complémentarité de forme.

2. Appareil de nettoyage selon la revendication 1, caractérisé par le fait que les mors d'accouplement (2) sont, chacun, munis d'une saillie (12) débordant d'au moins une surface de commande (8) et servant d'élément entraîneur (10) et que la douille de commande (4, 5) est munie d'un nombre, correspondant au nombre des mors d'accouplement (2), d'évidements (13) servant d'éléments entraîneurs (11).

3. Appareil de nettoyage selon la revendication 2, caractérisé par le fait que les saillies (12) des mors d'accouplement (2) sont formées par des surfaces latérales (12a) parallèles l'une à l'autre et que les évidements (13) prévus dans la douille de commande (4, 5) le sont par des fentes radiales à parois latérales (13) qui sont parallèles l'une à l'autre et entre lesquelles les saillies (12) des mors d'accouplement (2) sont disposées avec liberté de coulissement glissant selon la direction axiale et selon la direction radiale.

4. Appareil de nettoyage selon la revendication 3, caractérisé par le fait que les surfaces de commande (8) des mors d'accouplement (2) ont, en dehors des saillies (12), la forme de surfaces de secteurs de tronc de cône.

5. Appareil de nettoyage selon la revendication 1, caractérisé par le fait que la surface de commande (9) de la douille de commande (4, 5) a la forme d'une surface de tronc de cône creux interrompue par les évidements (13) conçus en tant que fente radiale.

6. Appareil de nettoyage selon la revendication 1, caractérisé par le fait que des deux côtés d'un plan radial (III-III) passant par le centre de gravité de l'accouplement (S), les surfaces de commande (8, 9) des mors d'accouplement (2), les deux douilles de commande (4, 5) et les éléments entraîneurs (10, 11) des mors d'accouplement (2) et des douilles de commandes (4, 5) sont conçus symétriques par rapport à un plan.
